(19) Europäisches Patentamt

European Patent Office

Office européen des brevets

(11) **EP 1 634 389 B1**

(12) **EUROPEAN PATENT SPECIFICATION**

(45) Date of publication and mention
of the grant of the patent:
**04.10.2006 Bulletin 2006/40**

(51) Int Cl.:
*H04B 7/06* (2006.01)    *H04B 7/08* (2006.01)
*H04L 25/03* (2006.01)

(21) Application number: 03738034.2

(22) Date of filing: **13.06.2003**

(86) International application number:
**PCT/EP2003/006282**

(87) International publication number:
**WO 2004/112279 (23.12.2004 Gazette 2004/52)**

(54) **JOINT OPTIMIZATION OF PRE AND POSTFILTER COEFFICIENTS**

GEMEINSAME OPTIMIERUNG VON VOR- UND NACH- FILTERKOEFFIZIENTEN

OPTIMISATION CONJOINTE DE COEFFICIENTS DE PREFILTRE ET DE POSTFILTRE

(84) Designated Contracting States:
**DE GB**

(43) Date of publication of application:
**15.03.2006 Bulletin 2006/11**

(73) Proprietor: **NTT DoCoMo, Inc.**
**Tokyo 100-6150 (JP)**

(72) Inventor: **DENNO, Satoshi**
**611-0011 Uji (JP)**

(74) Representative: **HOFFMANN EITLE**
**Patent- und Rechtsanwälte**
**Arabellastrasse 4**
**81925 München (DE)**

(56) References cited:
**EP-A- 1 311 094**          **WO-A-99/65160**

- **SONG B-G- ET AL: "JOINT PRE AND POSTFILTER DESIGN FOR SPATIAL DIVERSITY EQUALIZATION" IEEE TRANSACTIONS ON SIGNAL PROCESSING, IEEE, INC. NEW YORK, US, vol. 45, no. 1, 1997, pages 276-280, XP000656792 ISSN: 1053-587X**
- **BAN K ET AL: "Transmitter precoding with multiple transmit/receive antennas for high data rate communication in bandwidth-limited channels" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 1946-1950, XP010353211 ISBN: 0-7803-5435-4**

## Description

### FIELD OF THE INVENTION

The present invention relates to adaptive control of signal processing schemes in communication systems, and in particular to a method of estimating weight vectors for adaptive control of signal processing schemes in a communication system and a related adaptive controller.

### BACKGROUND ART

In developing third generation mobile communication systems further, higher data speed transmissions will be required in order to provide service enriched products such as multimedia services. As is well known, 100 Mbit services have been commercialized by means of the fixed networks, typically the Ethernet. In view of this, it may be assumed that high speed services will spread out also to mobile communication environments. This is one reason why such high speed data transmission will be desirable even in mobile communication environments.

Therefore, broader frequency bands are required as the transmission rate will increase. However, as frequency resources are limited in mobile communication environments using transmission over the air, however, huge frequency bands will hardly be assigned to mobile communication environments. Therefore, it is of utmost importance to increase transmission capacity, i.e. system transmission capacity within limited frequency bandwidth.

In order to increase transmission capacity, multiple input multiple output MIMO techniques have been known to be promising. Actually, many types of multiple input multiple output techniques have been proposed, e.g., BLAST Bell Layered Space Time Coding, further Almouti's space time coding, etc.

Basically, a transmitter side has no knowledge on channel characteristics in such multiple input multiple output systems. Further, an isolated communication environment is assumed for channels in these multiple input multiple output systems, leading to differences over environments in cellular communication networks. Therefore, use of channel information at a transmitter side may increase transmission capacity over mobile communication channels. In view of this, a transmit adapter's array in base stations has been investigated, where a directivity pattern generated in a received adapted array is also applied to an adaptive array in a transmitter side.

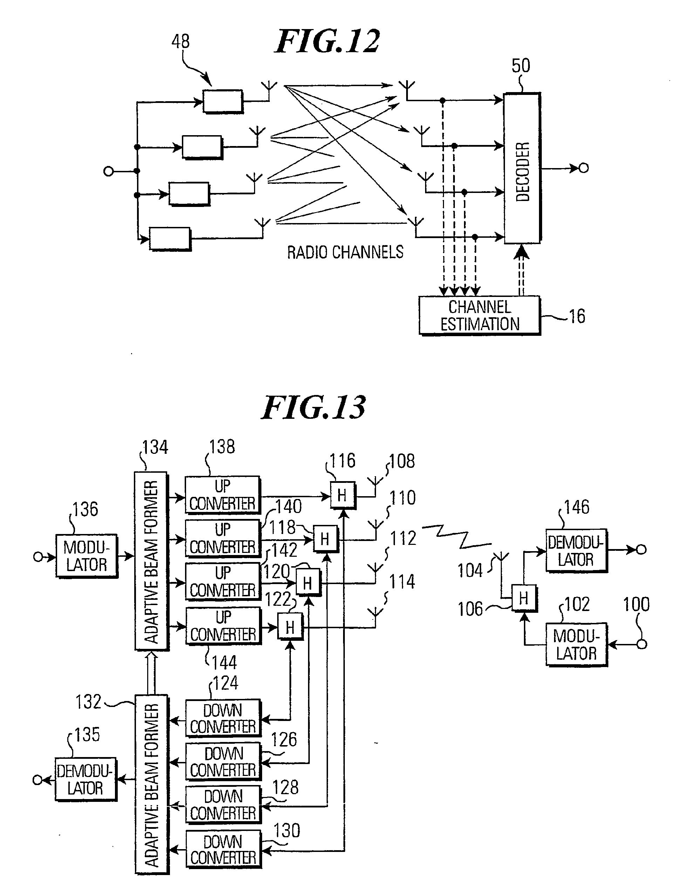

Fig. 13 shows a schematic diagram illustrating such optimization of directivity patterns for transmitter and receiver in a multiple input multiple output communication system as technical background to the present invention.

As shown in Fig. 13, transmit signals from input terminal 100 to a modulator 102 are then emitted from an antenna 104 through a hybrid 106. The emitted signals are transmitted via mobile communication channels and are received at the antenna array composed of antenna elements 108 to 114. The received signals pass through hybrids 116 to 122 and down converters 124 to 130. Then, they are supplied to an adaptive beam former 132.

Operatively, the adaptive beam former 132 improves the signal to noise ratio SNR of the received signals and rejects interference components by turning the beam and mode of the directivity pattern.

As shown in Fig. 13, the output of the adaptive beam former 132 is supplied to a demodulator 135 for output of an output signal.

As shown in Fig. 13, the directivity pattern obtained in the adaptive beam former 132 is supplied to a further adaptive beam former 134. Then, a reverse communication signal is fed to the adaptive beam former 134 via a modulator 136. Therefore, output signals generated with a directivity pattern same as that generated in the adaptive beam former 132 pass through up converters 138 to 144 and hybrids 116 to 122 for emission via the antennas 108 to 114.

Generally, if communication channels for both communication directions are the same, the received signal at antenna 104 has characteristics identical to the output signal of the adaptive beam former 132. In other words, the demodulated signals passing through hybrid 106 and a demodulator 146 has the same signal to noise ratio SNR as the output of demodulator 135.

From the above, it should be noted that transmit signal processing enables the improvement of signal to noise ratios of received signals, e.g., as mobile terminals in spite of no spatial signal processing at the mobile terminals. Therefore, this enables increase of communication system transmission capacity. Nevertheless, it should be noted that in communication systems like the one shown in Fig. 13, signal processing is only applied at one side of transmission, e.g., base stations, and that beam patterns are only optimized at this one side.

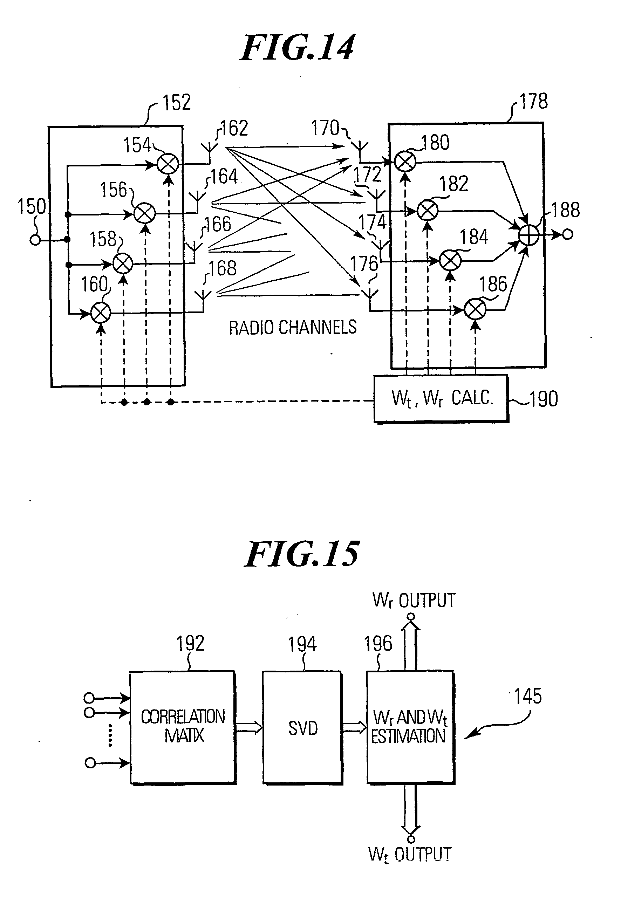

Fig. 14 shows an approach to do aside directivity pattern optimization in multiple input multiple output communication systems as further technical background of the present invention.

As shown in Fig. 14, transmission signals from input terminal 150 are fed to a transmit signal processing unit 152 comprising a plurality of multipliers 154 to 160. The related output signals of the multipliers 154 to 160 are emitted by antennas 162 to 168 for transmission via mobile communication channels and reception at the reception antennas 170 to 176.

As shown in Fig. 14, the received signals are supplied to a received signal processing unit 178 comprising a plurality of multipliers 180 to 186 and an adder 188.

As shown in Fig. 14, in view of the received signals, an estimation unit 190 generates so-called tap positions for both the transmit signal processing unit 152 and the reception signal processing unit 178. More details thereof can be found in document EP1311094.

Fig. 15 shows an approach to weight vector estimation on the basis of singular value decomposition according to Fig. 14.

As shown in Fig. 15, signals received at the reception antennas are fed to a correlation matrix generation unit 192 adapted to calculate and accumulate a correlation matrix of the received signals. The output of the correlation matrix generation unit 192 is supplied to a single value decomposition unit 194, operatively being adapted to multiply the generated correlation matrix by itself and to perform a single value decomposition on the generated matrix product.

As shown in Fig. 15, the result generated by the single value decomposition unit 194 is forwarded to an estimation unit 196 operatively adapted to estimate tap coefficients $W_r$ and $W_t$ for signal processing at the transmitter side and the receiver side, respectively.

However, the scheme for mode vector estimation explained so far is based on the so-called zero forcing criteria or, in other words, according to known solution the noise power is not taken into account during estimation of weight vector. On the contrary, noise components are removed from input signals to the correlation matrix generation unit 192.

In other words, known solutions attain only performance of zero forcing during weight vector estimation for signal processing schemes, so that the related communication systems strongly degrade in performance in the presence of co-channels interference.

Another relevant prior-art document is the paper "Joint Pre and Post Filter Design for Spatial Diversity Equalization" by Bong Gee Song and James A. Ritcey

## SUMMARY OF INVENTION

In view of the above the object of the present invention is to increase transmission performance in communication systems.

According to the present invention this object is achieved by a method of estimating weight vectors for adaptive control of signal processing schemes in a communication system, wherein a first signal processing scheme is adaptively controlled with a first weight vector and a second signal processing scheme is adaptively controlled with a second weight vector. In a first step signals derived from at least one input signal to the first signal processing scheme are transformed into an input vector to the estimation process. In a second step a tap vector is estimated by applying a minimum mean square method to minimize a difference between a reference signal and an inner product of the tap vector with the input vector to the estimation process. In a third step the tap vector is factorized into the first weight vector and the second weight vector.

An important advantage of the present invention is the application of a minimum means method for the estimation of a first weight vector and a second weight vector. In other words, according to the present invention it is proposed for the first time to use a mean square error norm that allows to take, e.g., either noise power or any other interfering components during transmission in a communication system into account when estimating signal processing weight vectors.

Another important advantage of the present invention is the appropriate transformation signals either supplied to or emitted from the first signal processing scheme into appropriate form for subsequent minimization of the means square error, which allows for efficient implementation of the inventive adaptive control scheme.

According to a preferred embodiment of the present invention the transformation into the input vector to the estimation process is achieved by re-arranging signals supplied to the first signal processing scheme or by re-arranging signals emitted from the first signal processing scheme into vector format.

The advantage of this preferred embodiment is that it allows for application of the inventive adaptive control scheme to any type of signal processing schemes. In particular, e.g., for beam forming signal processing the signals supplied to the first signal processing scheme will be re-arranged into vector format while, e.g., for multiple input multiple output type signal processing the signals emitted from the first signal processing will be considered for vector optimization. Therefore, irrespective of the particular type of signal processing used in the first signal processing scheme, the present invention supports appropriate information in support of subsequent optimization stages for weight vector estimation.

According to yet another preferred embodiment of the present invention there is executed a step of mapping interfering signals onto the input vector to the estimation process, where the interfering signals are, e.g., noise signals or signals emitted from interfering signal sources in the communication system.

An important advantage of this preferred embodiment is that it supports consideration of interference signals for optimization of overall communication performance also in view of co-channel disturbances or occurrence of noise on communication channels. Further, a mapping of related signal components onto the input vector to the estimation process may be achieved efficiently and flexibly in view of the considered interference.

According to yet another preferred embodiment of the present invention the minimum mean square method applied to estimate the tap vector is a minimum mean square adaptive algorithm or a Wiener-Hopf solution.

An advantage of this preferred embodiment of the present invention is that the use of adaptive algorithms is highly efficient in determining the optimum to the means square error optimization problem or, in other words, may be operated iteratively so as to determine the optimum solution to the means square error problem within only a finite number of iterations.

According to yet another preferred embodiment of the present invention the factorization of the tap vector into the first weight vector and the second weight vector is achieved by minimizing a mean square error of differences between elements of the tap vector and products of elements of the first weight vector and the second weight vector.

An advantage of this preferred embodiment of the present invention is that also the step of factorizing the determined tap vector into a first weight vector and a second weight vector is transferred into an optimization problem on the basis of a means square error norm, which optimization may be effectively implemented.

According to yet another preferred embodiment of the present invention the mean square error of differences between elements of the tap vector and products of elements of the first weight vector and the second weight vector is minimized subject to a constraint on transmission power in the communication system, e.g., using a Lagrange optimization approach.

An advantage of this preferred embodiment of the present invention is that it allows to resource ambiguities which exist for combined determination of the first weight vector and the second weight vector. Yet another important advantage is that commercially implemented communication systems are operated under constraints on transmission powers, which may therefore be considered for set-up of signal processing so as to further optimize performance.

According to yet another preferred embodiment of the present invention the Lagrange objective problem is reduced to a singular value decomposition problem with respect to a matrix form derived from elements of the tap vector.

This preferred embodiment of the present invention allows for very efficient optimization as the first weight vector may be represented as an eigenvector derived through singular value decomposition. Further, preferably the second weight vector may then be derived from the first weight vector through matrix multiplication with respect to a matrix set up from tap vector elements.

According to further preferred embodiments of the present invention, the adaptive control of signal processing may be related to demodulation at a receiver, dual side equalization, signal processing in a multiple input multiple output communication system and/or signal processing in a multiple input multiple output communication system with interfering users.

In view of the above, it is clear that an important advantage of the present invention is the flexibility in application to almost any type of communication systems used. Further, it should be noted that the present invention may as well be applied to any combination of such different types of communication systems.

According to yet another preferred embodiment of the present invention interference transfer characteristics are estimated through interference cancellation and subsequent calculation of the interference components by autocorrelation.

An important advantage of the present invention is that the estimation of interference transfer characteristics allows for optimized consideration of interference superimposed during communication for optimum performance of the adaptive control according to the present invention.

According to yet another preferred embodiment of the present invention there is provided a computer program product directly loadable into the internal memory of an adaptive controller for adaptive control of weight vectors used in signal processing schemes operated in a communication system comprising software code portions for performing the inventive adaptive control process when the product is run on a processor of the adaptive controller.

Therefore, the present invention is also provided to achieve an implementation of the inventive method steps on computer or processor systems. In conclusion, such implementation leads to the provision of computer program products for use with a computer system or more specifically a processor comprised in, e.g., an adaptive controller for adaptive control of weight vectors according to the present invention.

These programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

## BRIEF DESCRIPTION OF DRAWING

In the following preferred embodiments of the present invention will be described with reference to the drawing in which:

Fig. 1      shows a schematic diagram illustrating a field of application of the present invention;

Fig. 2      shows a schematic diagram illustrating a further field of application of the present invention;

Fig. 3      shows a schematic diagram of an adaptive controller for adaptive control of weight vectors as shown in Fig 1 or 2;

Fig. 4      shows a flowchart of operation of the adaptive controller shown in Fig. 3;

Fig. 5      shows a further detailed diagram of the factorization unit shown in Fig. 4;

Fig. 6      shows a flowchart of operation of the factorization unit shown in Fig. 5;

Fig. 7      shows a schematic diagram illustrating the application of the present invention to a demodulation process at a receiver in a communication system;

Fig. 8      shows a schematic diagram illustrating the application of the present invention to a dual side equalization process in a communication system;

Fig. 9      shows a schematic diagram illustrating the application of the present invention to a multiple input multiple output communication system;

Fig. 10     shows a schematic diagram illustrating the application of the present invention to a multiple input multiple output communication system with interfering users;

Fig. 11     shows a schematic diagram illustrating the estimation of interfering characteristics according to the present invention;

Fig. 12     shows a schematic diagram illustrating the application of the present invention to a space and time coding communication system;

Fig. 13     shows a schematic diagram illustrating optimization of directivity patterns for transmitter and receiver in a multiple input multiple output communication system as technical background to the present invention;

Fig. 14     shows an approach to dual side directivity pattern optimization in multiple input multiple output communication systems as technical background to the present invention; and

Fig. 15     shows an approach to weights vector estimation on the basis of singular value decomposition according to the present invention.

## DESCRIPTION OF PREFERRED EMBODIMENTS

In the following preferred embodiments of the present invention will be explained with reference to the drawing. Insofar as different aspects of functionality residing in the present invention are described, it should be noted that this functionality may be achieved either in hardware, software, or a combination thereof.

Further, the different embodiments of the present invention to be described in the following are not restricted to a particular type of communication system, and are applicable both to any type of fixed or mobile communication systems applying a two side signal processing system sandwiching at least one communication channel.

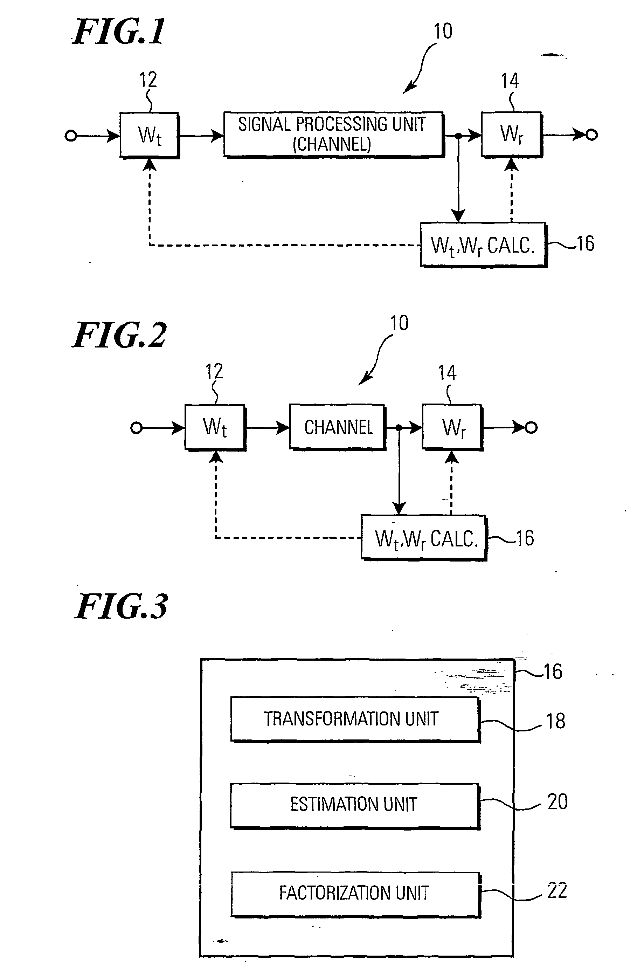

Fig. 1 shows a schematic diagram illustrating a field of application of the present invention.

As shown in Fig. 1, the present invention relates to a method and apparatus for estimating weight vectors for adaptive control of signal processing schemes in a communication system 10, wherein a first signal processing scheme 12 is adaptively controlled with a first weight vector W, and a second signal processing scheme 14 is adaptively controlled with a second weight vector W. Without restricting scope of the present invention, it may be generally assumed that any further type of signal processing scheme is achieved between the first signal processing scheme and the second signal processing scheme, e.g., for modeling communication channels as filters such as finite state machines.

Further, according to the present invention, the adaptive control of the first signal processing scheme 12 and the second signal processing scheme 14 is achieved by an adaptive controller 16 and a related adaptive controller method to be described in the following. As will be outlined in depth in the following, the adaptive controller 16 and the related method estimate weight vectors for use in the first signal processing scheme 12 and the second signal processing scheme 14 on the basis of minimum means square criteria so as to achieve superior performance to the conventional scheme.

Fig. 2 shows a schematic diagram illustrating a further field of application of the present invention.

The adaptive control scheme shown in Fig. 2 differs over the one shown in Fig. 1 in that received signals are optimized by controlling both transmitter and receiver side signal processing schemes in an adaptive manner. Therefore, further to the application scenario illustrated in Fig. 1, according to this two-sided optimization approach there exists a communication channel sandwich between the first signal processing scheme 12 and the second signal processing scheme. The model illustrated in Fig. 2 represents many types of systems, e.g., dual-side equalization schemes, dual-side antenna signal processing schemes called multiple input and multiple output schemes, or any combination thereof.

Irrespective of the field of application as shown in Fig. 1 or Fig. 2, according to the present invention the estimated weight vectors may be forwarded to the related first signal processing scheme and the second signal processing scheme 14, which may alternatively be arranged at one side of a communication channel or at both sides of a communication channel, as will be shown in the following.

Fig. 3 shows a schematic diagram of an adaptive controller for adaptive control of weight vectors as shown in Fig. 1 or Fig. 2.

As shown in Fig. 3, the adaptive controller according to the present invention comprises a transformation unit 18, an estimation unit 20, and a factorization unit 22.

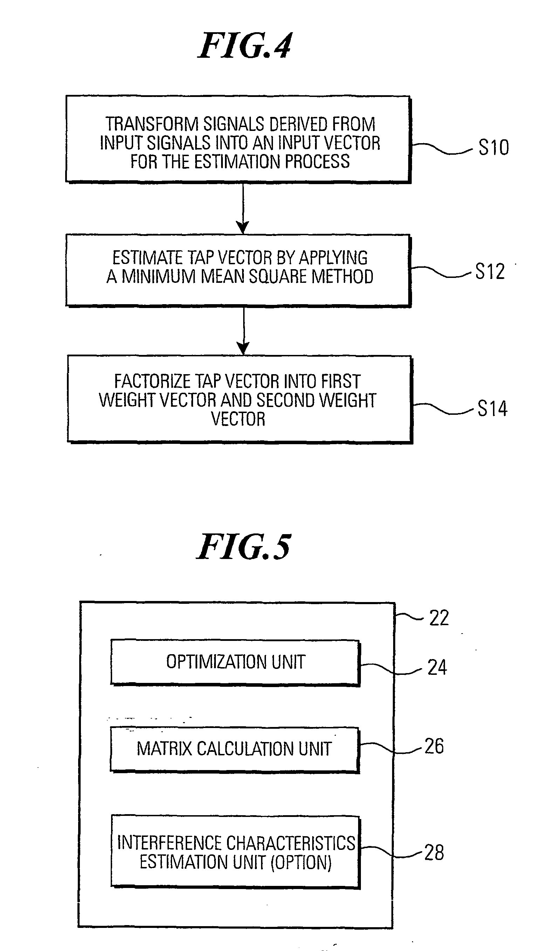

Fig. 4 shows a flowchart of operation for the adaptive controller shown in Fig. 3.

As shown in Fig. 4, a first step S10 executed in the adaptive controller operatively achieved by the transformation unit 18 shown in Fig. 3 relates to transforming signals derived from at least one input signal $x_i$ to the first signal processing scheme into an input vector $U_k$ for use during subsequent estimation of weight vectors. Here, $k$ relates to an instant of time where the weight vector estimation is carried out.

It should be noted that according to the present invention the transformation into the input vector to the estimation process is achieved by re-arranging signals supplied to the first signal processing scheme into vector format.

Alternatively, the transformation into the input vector to the estimation process is achieved by re-arranging signals emitted from the first signal processing scheme into vector format.

According to preferred embodiments of the present invention the setup of the input vector to the estimation process for weight vector also comprises the step of mapping interfering signals $i_i$ onto the input vector to the estimation process, e.g., noise signals or signals emitted from interfering signal sources in the communication system.

In view of the above, the set up of the input vector to the estimation process of weight vectors may be formally represented according to

$$U_k = \{u_i\} = \{x_i ; i_i\}$$

(1)

As shown in Fig. 4, a second step S12 executed in the adaptive controller is operatively achieved by the estimation unit 20 shown in Fig. 3 or a optimization unit comprised therein (not shown).

The step S12 relates to estimating a tap vector $C_k$ by applying a minimum mean square method to minimize a difference $e(k)$ between a reference signal $d(k)$ and an inner product $z(k)$ of the tap vector with the input vector to the estimation process $U_k$ at instant of time $k$.

The basic understanding underlying the present invention is that weight vectors for use in the first signal processing scheme and the second signal processing scheme should be tuned in view of existing input to the first processing scheme, e.g., training information, so as to minimize the generated deviation from a reference at the output of the second processing scheme. Contrary to existing solutions, according to the present invention it is proposed to incorporate interference components into such tuning process for overall performance optimization.

In more detail and without restricting scope of the present invention, it may be assumed that the output of the signal processing scheme at an instant of time $k$ may be represented according to

$$z(k) = C_k^H U_k$$

$$(2)$$

wherein *H* is a Hermitian transpose operator.

Further, the tap vector $C_k$ may be represented according to

$$C_k = W_s(k) \otimes W_t^*(k)$$

$$(3)$$

wherein $W_s(k)$ is the first weight vector at instant of time *k* having dimension *N*, $W_t(k)$ is the second weight vector at instant of time *k* having dimension *L*, $\otimes$ is a Kronecker product operator, and * is a conjugate complex operator.

In view of the above, according to the present invention it is proposed to apply a minimum mean square method to solve an optimization problem on the basis of a normal equation according to

$$e_k = d_k - z_k = d_k - C_k^H \cdot U_k \to \min$$

$$(4)$$

In view of the above, the optimization unit of the estimation unit minimizes the error to achieve signal processing with maximum performance. Assuming an Average White Gaussian Noise AWGN communication channel the tap vector is preferably estimated on the basis of the minimum mean square error MMSE criterion.

Generally, the minimum solution to the equation expressing the mean square error may be calculated as so-called Wiener solution according to

$$C = \left\langle U_k U_k^H \right\rangle^{-1} \left\langle d(k) * U_k \right\rangle$$

$$(5)$$

wherein <> indicates a mean value and the negative exponent of one indicates matrix inversion.

According to a preferred embodiment of the present invention it is proposed to avoid a matrix inversion by applying a minimum mean square adaptive algorithm or a least means square algorithm.

In more detail, the minimum solution to the equation expressing the mean square error may calculated iteratively according to

$$e(k) = d(k) - (C_k^{n-1})^H U_k$$

$$C_k^n = C_k^{n-1} + e(k)^* U_k$$

$$(6)$$

wherein *n* is an index of iteration.

After some iterations the tap vector should converge to the optimum solution. As is known, e.g., from S. Haykin,

Adaptive Filter Theory, McGraw Hill, the number of necessary iterations is 20·LN.

It should be noted that the estimation of the tap vector is not restricted to a particular type of minimization technique as long as minimization of the mean square error is achieved. Therefore, any particular method achieving this minimization is to be considered as covered by the scope of the present invention.

As shown in Fig. 4, on the basis of the determined tap vector the adaptive controller will then execute step S14, operatively achieved by the factorization unit 22 shown in Fig. 3, to factorize the tap vector $C_k$ into the first weight vector and the second weight vector.

In other words, factorization in the sense of the present invention means seeking elements for the first weight vector and the second weight vector such that a product form of these vectors approximates a matrix set up from elements of the tap vector according to

$$\{c_{(i-1)N+j}\} = W_s(k)W_t^H(k) \tag{5}$$

A representation equivalent to equation (5) is to setup a matrix $R_k$ from the minimum solution according to

$$R_k = \{r_{i,j}(k)\} = \{c_{(i-1)N+j}\} \tag{6}$$

and to re-write equation (5) according to

$$R_k = W_s(k)W_t^H(k). \tag{7}$$

In view of the above, approximation of the matrix $R_k$ through a factorization of the weight vectors is equivalent to the minimization of an error norm applied to an error matrix defined on the matrix

$$E_k = \{e_{i,j}(k)\} = R_k - W_s(k)W_t^H(k). \tag{8}$$

Fig. 5 shows a further detailed diagram of the factorization unit 22 shown in Fig. 4.

As shown in Fig. 5, the factorization unit comprises an optimization unit 24, a matrix calculation unit 26, and optionally an interference characteristics estimation unit 28.

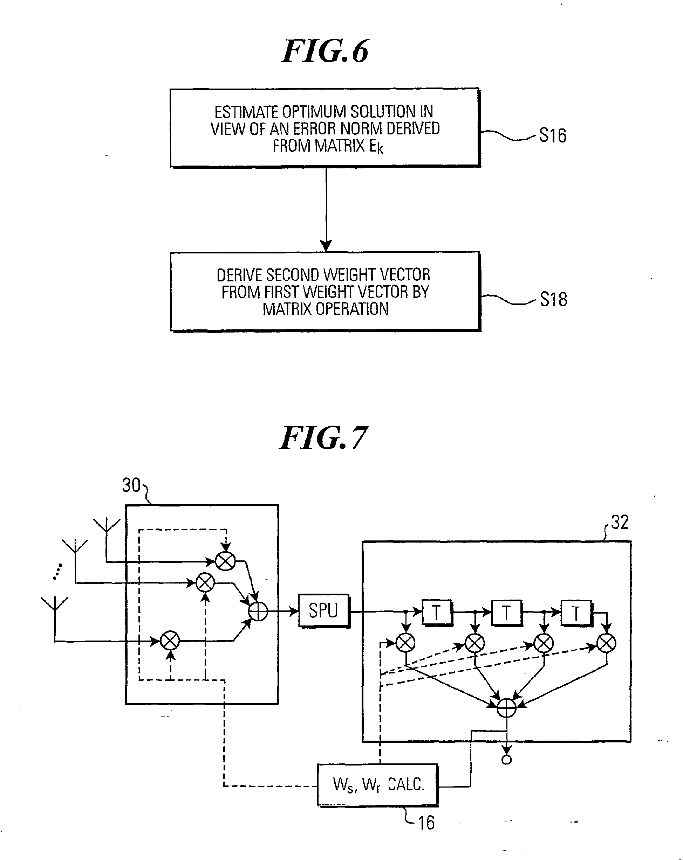

Fig. 6 shows a flowchart of operation of the factorization unit shown in Fig. 5.

As shown in Fig. 5 and outlined above, in a step S16 the optimization unit determines an optimum solution in view of an error norm applied to matrix $E_k$.

Here, it should be noted that the first weight vector $W_s$ may be determined arbitrarily by adjusting the second weight vector $W_t$. In other words, there exists an ambiguity in terms of setting the first weight vector $W_s$ and the second weight vector $W_t$.

To handle this ambiguity, one option is to introduce a constraint, without loss of generality. A normalization of transmission power according to

$$W_s^H(k)W_{ts}(k)=1.$$

$$(9)$$

is considered reasonable and effective, e.g., in commercial communication systems. One reason for this is that transmission power usually is defined by license so that this constraint on transmission power is not considered acceptable but is, maybe, indispensable, e.g., in radio communication systems.

It should be noted that the right hand side of equation (9) maybe substituted by any constant and that the specific value of one is only given for ease of explanation in the following.

In view of the above, the factorization of the first weight vector and the second weight vector according to the present invention is considered as a solution minimizing the error norm matrix $E_k$ subject to the formulated constraint.

One such norm considered according to the present invention is the Frobenius norm defined according to

$$J_F = \sum_{i=1}^{N}\sum_{j=1}^{L}\left|e_{i,j}(k)\right|^2 = \sum_{i=1}^{N}\sum_{j=1}^{L}\left|r_{i,j}(k)-w_{s,i}(k)w_{t,j}^{*}(k)\right|^2$$

$$(10)$$

The objective function for minimizing this norm subject to the constraint on the transmission power may be formulated as Lagrange objective function according to

$$L_F = J_F - \lambda(W_s^H(k)W_s(k)-1)$$

$$(11)$$

In other words, according to the present invention it is proposed to achieve factorization of the tap vector into the first weight vector and the second weight vector by minimizing a mean square error of differences between elements of the tap vector and products of elements of the first weight vector and the second weight vector. Further, the mean square error is minimized subject to a constraint on transmission power in the communication system.

In equation (11) $\lambda$ is a constant known as Lagrange multiplier. The optimum solution is achieved through determination of a solution to the following equation system

$$\frac{\partial L_F}{\partial w_{s,i}^{*}(k)} = -\sum_{j=1}^{L}(r_{i,j}(k)-w_{s,i}(k)w_{t,j}^{*}(k))w_{t,j}(k)-\lambda w_{s,i}(k)=0$$

$$i=1,\ldots,N$$

$$\frac{\partial L_F}{\partial w_{t,j}^*(k)} = \sum_{i=1}^{N}(r_{i,j}(k) - w_{s,i}(k)w_{t,j}^*(k))^* w_{s,i}(k) = 0$$

$$j = 1, \ldots, L$$

$$(12)$$

This equation system (12) can be re-written in vector form according to

$$R_k W_t(k) = W_s(k)W_t^H(k)W_t(k) - \lambda W_s(k)$$

$$(13)$$

$$W_s^H(k)R_k = W_s^H(k)W_s(k)W_t^H(k) = W_t^H(k)$$

$$(14)$$

Substituting $W_t(k)$ in equation (14) into equation (13) leads to the following equation

$$R_k R_k^H W_s(k) = \left\{ W_s^H(k)R_k R_k^H W_s(k) - \lambda \right\} W_s(k)$$

$$(15)$$

Considering the constraint according to equation (8), equation (15) means the first weight vector $W_s(k)$ is derivable as an eigenvector of matrix $R_k R_k^H$ according to

$$R_k R_k^H W_s(k) = \lambda_s W_s(k)$$

$$(16)$$

In equation (16) the value of $\lambda_s$ is the eigenvalue corresponding to the eigenvector of $R_k R_k^H$. It should be noted that a rank deficiency of the matrix $R_k R_k^H$ will require a singular value decomposition of the matrix $R_k R_k^H$

for the determination of at least one eigenvector and a related eigenvalue of this matrix $R_k R_k^H$.

It should be noted that single value decomposition may be achieved using any appropriate method, e.g., a Jacobi method or a QR method. Further, although the invention requires the solution to an optimization problem for factorization of the tap vector in the weight vectors, the generated weight vector results should be carried out only during some period, e.g., a training sequence when the communication channel is not varying rapidly. Therefore, the operation and complexity will be significantly reduced by simultaneous estimation of weight vectors during, e.g., a training sequence and subsequently maintaining the weight vectors constant, compared with the complexity of conventional spatial and temporal signal processing schemes.

Further, the transmission in particular in mobile communication systems will grow over time as the demand for high quality services and related high speed data transmissions is ongoing. Therefore, as in such communication systems the maximum Doppler frequency, i.e. the maximum Doppler frequency normalized by symbol duration becomes very small, the present invention is considered particularly beneficial as the decreasing intervals between singular value calculations may be compensated by the low operational complexity of the adaptive control scheme according to the present invention.

Therefore equation (15) may be re-written according to

$$R_k R_k^H W_s(k) = \lambda_s W_s(k) = \left\{ \lambda_s W s^H(k) \dot{W}_s(k) - \lambda \right\} W_s(k) = \left\{ \lambda_s - \lambda \right\} W_s(k)$$

$$(17)$$

In view of the above, it is concluded that the Lagrange multiplier should satisfy the following equation

$$\lambda = 0$$

$$(18)$$

The equation (18) means that the optimal solution to the Lagrange objective function is identical to that without the constraint according to equation (8), although, strictly speaking the error surface around the optimum solution is different from that without the constraint on the transmission power

In view of this, the second weight vector $W_t(k)$ may be obtained by substituting the first weight vector determined according to equation (16) into equation (14) according to

$$W_t(k) = R_k^H W_s(k)$$

$$(19)$$

In the following, different scenarios of application of the present invention within communication systems will be explained.

Fig. 7 shows a schematic diagram illustrating the application of the present invention to a demodulation process at a receiver in a communication system.

As shown in Fig. 7, the adaptive control according to the present invention achieves demodulation at a receiver of the communication system, wherein the first signal processing scheme 30 achieves spatial signal processing for beam forming, and the second signal processing scheme 32 achieves temporal signal processing for demodulation subsequent to beam forming.

Further, spatial signal processing for beam forming is achieved by the first signal processing scheme operating as a first multiplier field 30 for multiplying input signals received via a number *N* of reception antennas with the elements of the first weight vector according to

$$s(k) = W_s^H(k)X(k)$$

$$(20)$$

wherein $X(k)=[x_1(k),...,x_N(k)]^T$ is a vector of antenna reception signals.

Further, the second signal processing scheme operates as a first FIR filtering scheme 32 using a number of $L$ delay elements and multipliers corresponding to the second weight vector. The beam former output to the second signal processing scheme at instant of time $k$ is represented in vector form according to

$$S_k = [s(k), s(k-1), ..., s(k-L+1)]^T$$

$$(21)$$

The output of the second signal processing at instant of time $k$ is represented according to

$$z(k) = W_s^H(k)X_kW_t(k) + n_k$$

$$(22)$$

wherein $X_k = [X(k),X(k-1),...,X(k-l+1)]$ is a received signal matrix set up from a plurality of $L$ vectors of antenna reception signals supplied to the first signal processing scheme, and $n_k$ is a noise vector representing interference components.

For this example of application the vector $U_k$ is defined according to

$$U_k = \left\{u_{(i-1)N+j}(k)\right\} = \left\{x_i(k-j+1)\right\}$$

$$(23)$$

In view of the above, the optimization schemes outlined above in general may now be applied for optimization demodulation performance.

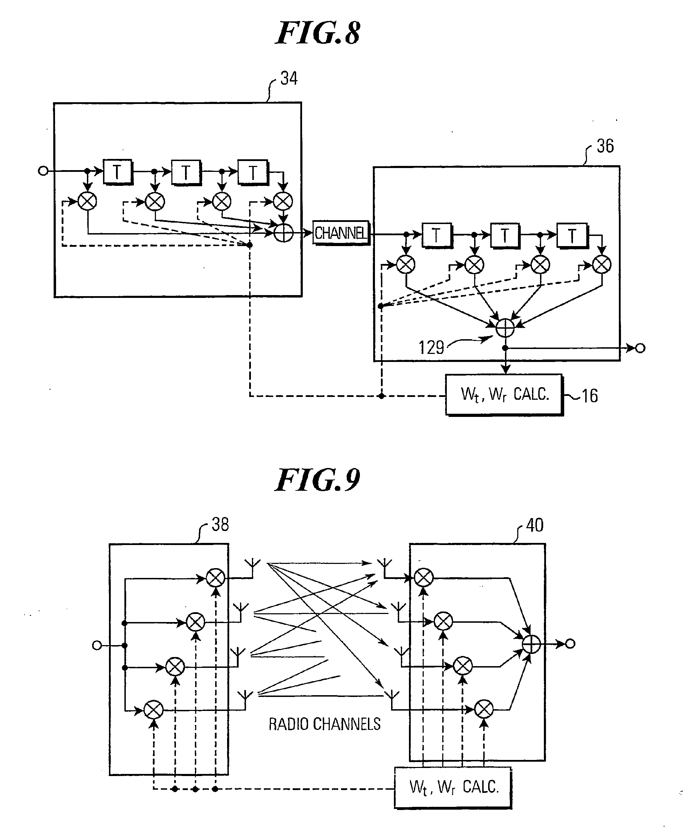

Fig. 8 shows a schematic diagram illustrating the application of the present invention to a dual side equalization process in a communication system as second application scenario.

As shown in Fig. 8, the adaptive control according to the present invention in this case is applied to a dual side equalization system, wherein the first signal processing scheme achieves equalization at a transmitter side, and the second signal processing scheme achieves equalization at a receiver side.

As shown in Fig. 8, the first signal processing scheme operates as a second FIR signal filtering scheme 34 using a number of $N$ delay elements and multipliers corresponding to the first weight vector, and the second signal processing scheme operates as a third FIR signal filtering scheme 36 using a number of $L$ delay elements and multipliers corresponding to the second weight vector.

Further, the outputs of the delay elements in the second FIR signal processing scheme 34 are defined to $\overline{X}(k)$ $=[x(k),x(k-1),...,x(k-N+1)]^T$ with $x(i)$ as input signal to the first signal processing scheme at instant of time $i$, and the output of the second FIR signal processing scheme 34 at instant of time $k$ is defined according to

$$s(k) = W_s^H(k)X(k)$$

$$(24)$$

Further, a received signal vector is defined according to

$$H_k \cdot S_k + N_k$$

$$(25)$$

wherein

$$H_k = \begin{bmatrix} h_0 & h_1 & \cdots & h_{L-1} & 0 & 0 \\ 0 & h_0 & h_1 & \cdots & h_{L-1} & \vdots \\ \vdots & \ddots & \ddots & \cdots & \ddots & 0 \\ 0 & \cdots & 0 & h_0 & \cdots & h_{L-1} \end{bmatrix}$$

$$(26)$$

is a channel impulse response matrix at instant of time $k$, $S_k = [s(k),s(k-1),...,s(k-L+1)]^T$ is a transmit signal vector, and $N_k = \{n\,(k-j+1)\}j = 1,...,L$ are noise components superimposed during transmission.

In view of the above, the output of the third FIR signal filtering scheme 36 may be represented according to

$$z(k) = S_k^T H_k^T W_t(k) = (W_s^H(k) \bar{X} H_k^T + N_k^T) W_t(k) = \begin{bmatrix} W_s^H(k)I \end{bmatrix} \begin{bmatrix} \bar{X} H_k^T \\ N_k^T \end{bmatrix} W_t(k)$$

$$(27)$$

In this case and in view of noise components to be considered, equation (3) is modified by a unity vector $I$ according to

$$C_k = \begin{bmatrix} W_s(k) \\ I \end{bmatrix} \otimes W_t^*(k),$$

$$(28)$$

Further, an input signal matrix is defined according to $\overline{X_k} = [\overline{X}(k), \overline{X}(k-1),...,\overline{X}(k-L+1)]$, a reception matrix is defined according to $X_k = \overline{X}_k H_k^H$ , and $U_k$ is defined according to

$$U_k = \begin{cases} \{u_{(i-1)(N+1)+j}(k)\} = \{x\ (k-i-j+1)\} & j \le N, i = 1,...,L \\ \{u_{(i-1)(N+1)+N+1}(k)\} = \{n\ (k-i)\} & i = 1,...,L \end{cases}$$

$$(29)$$

wherein $x\ (k - i - j +1)$ is the matrix element in row $i$ and column $k - j +1$ of $X_k$, and $n\ (k)$ are noise components derived from $N_k$.

In view of the above, the optimization schemes outlined above in general may now be applied for optimization of the dual side equalization.

Fig. 9 shows a schematic diagram illustrating the application of the present invention to a multiple input multiple output communication system.

As shown in Fig. 9, in the multiple input multiple output communication system the first signal processing scheme achieves output of the transmission signal at a transmitter side and the second signal processing scheme achieves beam forming at a receiver side.

As also shown in Fig. 9, the first signal processing scheme operates as a second multiplier field 38 corresponding to the first weight vector and the second signal processing scheme operates as a third multiplier field 40 corresponding to the second weight vector.

Further, the outputs of the second multiplier field 38 at instant of time k are defined according to

$$S_k = W_s^H(k)x(k)$$

$$(30)$$

wherein $x(k)$ is the input to the first multiplier field at instant of time $k$, represented as a scalar.

Further, a received signal vector is defined according to

$$\overline{X}_k = A_k \cdot S_k + N_k$$

$$(31)$$

wherein entries of the matrix $A_k$ correspond to correlations of the *i-th* transmitter antenna element and the *j-th* receiver antenna element at instant of time $k$ and $N_k = \{n_{ji}(k)\}, j = 1,...,L$ are noise components superimposed during transmission.

In view of the above, the output of the third multiplier field 40 may be represented according to

$$z(k) = (S_k A_k + N_k)W_t(k) = (W_s^H(k)A_k x(k) + N_k)W_t(k) = \left[W_s^H(k)I \begin{bmatrix} A_k x(k) \\ N_k \end{bmatrix}\right]W_t(k)$$

$$(32)$$

Further, a reception matrix is defined according to $X_k = A_k \cdot x(k)$ and $U_k$ is defined according to

$$U_k = \begin{cases} \{u_{(i-1)(N+1)+j}(k)\} = \{x_{ij}(k)\} & j \leq N, i = 1,...,L \\ \{u_{(i-1)(N+1)+N+1}(k)\} = \{n_i(k)\} & i = 1,...,L \end{cases}$$

$$(33)$$

wherein $x_{ij}(k)$ is the matrix element in row $i$ and column $j$ of $X_k$, and $n_i(k)$ are noise components derived from $N_k$.

In view of the above, the optimization schemes outlined above in general may now be applied for optimization of communication in a multiple input multiple output communication system.

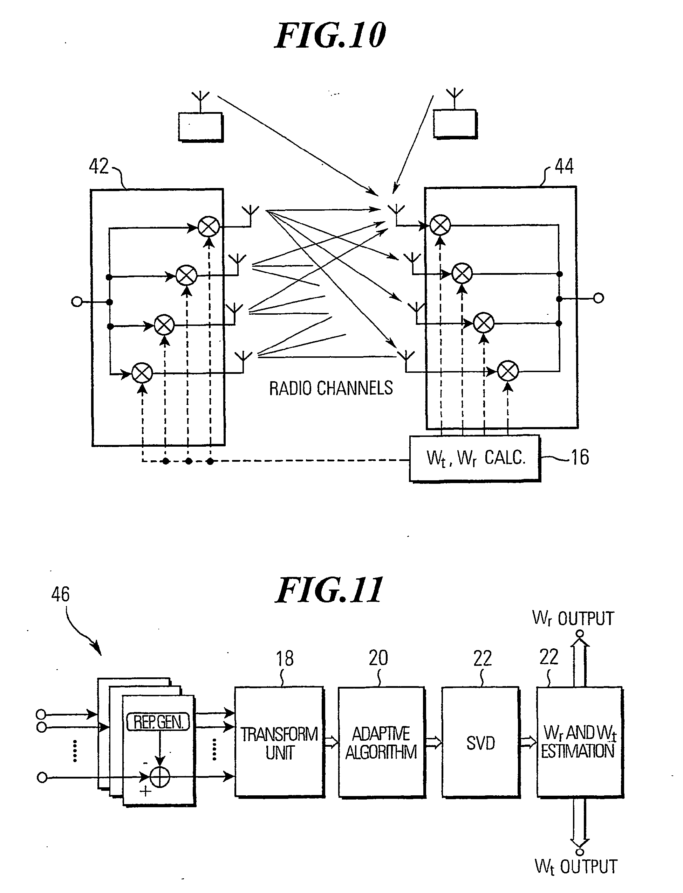

Fig. 10 shows a schematic diagram illustrating the application of the present invention to a multiple input multiple output communication system with interfering users.

As shown in Fig. 10, in the multiple input multiple output communication system with interfering users the first signal processing scheme achieves output of the transmission signal at a transmitter side and the second signal processing scheme achieves beam forming at a receiver side.

As also shown in Fig. 10, the first signal processing scheme operates as a fourth multiplier field 42 corresponding to the first weight vector and the second signal processing scheme operates as a fifth multiplier field 44 corresponding to the second weight vector.

Further, the outputs the fourth multiplier field 43 at instant of time $k$ are defined according to

$$S_k = W_s^H(k)x(k)$$

$$(34)$$

wherein $x(k)$ is the input to the first multiplier field at instant of time $k$.

Further, a received signal vector may be defined according to

$$A_k \cdot S_k + \sum_{i=1}^{K} B_{k,i} x_i(k)$$

$$(35)$$

wherein entries of the matrix $A_k$ correspond to correlations of the *i-th* transmitter antenna element and the *j-th* receiver antenna element at instant of time k, entries of the matrix $B_{k,i}$ correspond to the channel impulse response matrix of the *i-th* interfering user transmitting $x_i$.

In view of the above, the output of the fifth multiplier field 44 may be represented according to

$$y(k) = \left( W_s^H(k)A_k x(k) + \sum_{i=1}^{K} B_{k,i} x_i(k) \right) W_r(k) = \left[ W_s^H(k)I \begin{bmatrix} A_k x(k) \\ \sum_{i=1}^{K} B_{k,i} x_i(k) \end{bmatrix} \right] W_r(k)$$

$$(36)$$

Further, a reception matrix is defined according to $X_k = A_k \cdot x(k)$ and $U_k$ is defined according to

$$U_k = \begin{cases} \{u_{(i-1)(N+1)+j}(k)\} = \{x_{ij}(k)\} & j \leq N, i = 1,\ldots,L \\ \{u_{(i-1)(N+1)+N+1}(k)\} = \{\beta_i(k)\} & i = 1,\ldots,L \end{cases}$$

$$(37)$$

.

wherein $x_{ij}(k)$ is the matrix element in row $i$ and column j of $X_k$ and $i_i(k)$ an interference component derived from

$$\sum_{i=1}^{K} B_{k,i} x_i(k) = [\beta_1(k),\ldots,\beta_L(k)].$$

Fig. 11 shows a schematic diagram illustrating the estimation of interfering characteristics according to the present invention.

To achieve estimation of interfering characteristics, according to the present invention it is proposed to supply input signals coming from antenna elements, e.g., antennas shown in Figs. 9 and 10, to interference cancellers 46 the output of which is forwarded to the transformation unit 18. The interference cancellers 46 are adapted to generate signal components in replica generators when subtracted from the input signals at the antennas, and subsequent hereto processed in the sense outlined above, e.g., with respect to Figs. 9 and 10.

Fig. 12 shows a schematic diagram illustrating the application of the present invention to a space and time coding communication system.

As shown in Fig. 12, the application of the present invention to a space in time coding communication system relies on the provision of encoders 48 achieving space time coding before emission of transmit signals.

As shown in Fig. 12, received signals are fed to a decoder 50 and simultaneously forwarded to the adaptive control unit 16 implementing the weight vector estimation according to the present invention. Here, the estimated weight vectors are used for channel impulse response modeling of the channel linking the transmitter side with the receiver side.

## Claims

1.    Method of estimating weight vectors for adaptive control of signal processing schemes in a communication system, wherein a first signal processing scheme is adaptively controlled with a first weight vector and a second signal processing scheme is adaptively controlled with a second weight vector, **characterised by** the steps:

   - transforming signals derived from at least one input signal $(x_i)$ to the first signal processing scheme into an input vector $U_k$ to the estimation process;
   - estimating a tap vector $C_k$ representable according to $C_k = W_s(k) \otimes W_t^*(k)$, wherein $W_s(k)$ is the first weight vector at instant of time k having dimension $N$, $W_t(k)$ is the second weight vector at instant of time $k$ having dimension $L$, $\otimes$ is a Kronecker product operator, and * is a conjugate complex operator, by applying a minimum mean square method to minimize a difference between a reference signal $d(k)$ and an inner product $z(k)$ of the tap vector with the input vector to the estimation process according to:

   $$e_k = d_k - z_k = d_k - C_k^H \cdot U_k \rightarrow \min$$

   - factorizing the tap vector into the first weight vector and the second weight vector by seeking elements for the first weight vector and the second weight vector such that a product form of these vectors approximates a matrix $R_k$ which is set up from elements of the tap vector according to

   $$R_k = \{r_{ij}(k)\} = \{c_{(i-1)N+j}\} = W_s(k) W_t^H(k)$$

2.    Method according to claim 1, **characterized in that** the transformation into the input vector to the estimation process is achieved by re-arranging signals supplied to the first signal processing scheme into vector format.

3.    Method according to claim 1, **characterized in that** the transformation into the input vector to the estimation process is achieved by re-arranging signals emitted from the first signal processing scheme into vector format.

4. Method according to claim 2 or 3, *characterized in that* it further comprises the step of mapping interfering signals onto the input vector to the estimation process.

5. Method according to one of the claims 1 to 4, *characterized in that* a minimum mean square algorithm is applied to estimate the tap vector.

6. Method according to claim 5, *characterized in that* the mean square error is minimized subject to a constraint on transmission power in the communication system.

7. Method according to claim 6, *characterized in that* an objective for minimizing differences between elements of the tap vector and products of elements of the first weight vector and the second weight vector is a Lagrange objective function reflecting square values of differences and the constraint on the transmission power.

8. Method according to one of the claims 1 to 7, *characterized in that* signal processing achieves demodulation at a receiver of the communication system, the first signal processing scheme achieves spatial signal processing for beam forming, and the second signal processing scheme achieves temporal signal processing for demodulation subsequent to beam forming.

9. Method according to one of the claims 1 to 7, **characterized in that** the signal processing scheme achieves dual side equalization system, the first signal processing scheme achieves equalization at a transmitter side, and the second signal processing scheme achieves equalization at a receiver side.

10. Method according to one of the claims 1 to 7, *characterized in that* the communication system is a multiple input multiple output communication system, the first signal processing scheme achieves output of the transmission signal at a transmitter side, and the second signal processing scheme achieves beam forming at a receiver side.

11. Method according to one of the claims 1 to 7, *characterized in that* the communication system is a multiple input multiple output communication system with interfering users, the first signal processing scheme achieves output of the transmission signal at a transmitter side, and the second signal processing scheme achieves beam forming at a receiver side.

12. Adaptive controller for adaptive control of weight vectors used in signal processing schemes operated in a communication system, wherein a first signal processing scheme is adaptively controlled with a first weight vector and a second signal processing scheme is adaptively controlled with a second weight vector, **characterised by** :

- a transforming unit adapted to transform signals derived from at least one input signal ($x_i$) to the first signal processing scheme into an input vector $U_k$ to the estimation process;
- an estimating unit adapted to estimate a tap vector $C_k$ representable according to $C_k = W_s(k) \otimes W_t{}^*(k)$, wherein $W_s(k)$ is the first weight vector at instant of time k having dimension $N$, $W_t(k)$ is the second weight vector at instant of time $k$ having dimension $L$, $\otimes$ is a Kronecker product operator, and * is a conjugate complex operator, by applying a minimum mean square method to minimize a difference between a reference signal $d(k)$ and an inner product $z(k)$ of the tap vector with the input vector to the estimation process according to:

$$e_k = d_k - z_k = d_k - C_k^H \cdot U_k \to \min$$

- a factorizing unit adapted to factorize the tap vector into the first weight vector and the second weight vector by seeking elements for the first weight vector and the second weight vector such that a product form of these vectors approximates a matrix $R_k$ which is set up from elements of the tap vector according to

$$R_k = \left\{ z_{ij}(k) \right\} = \{ c_{(i-1)N+j} \} = W_s(k) W_t{}^H(k) .$$

13. Adaptive controller according to claim 12, *characterized*

*in that* the transformation unit is adapted is to rearrange signals supplied to the first signal processing scheme into vector format.

**14.** Adaptive controller according to claim 12, *characterized in that* the transformation unit is adapted is to rearrange signals emitted from the first signal processing scheme into vector format.

**15.** Adaptive controller according to claim 13 or 14, *characterized in that* the transformation unit is further adapted to map interfering signals onto the input vector to the estimation process.

**16.** Adaptive controller according to one of the claims 12 to 15, *characterized in that* the estimation unit comprises a optimization unit adapted to operate a minimum mean square algorithm to estimate the tap vector.

**17.** Adaptive controller according to claim 16, *characterized in that* the optimization unit is adapted to minimize the mean square error subject to a constraint on transmission power in the communication system.

**18.** Adaptive controller according to claim 17, *characterized in that* the optimization unit is adapted to minimize a Lagrange objective function reflecting square values of differences between elements of the tap vector and products of elements of the first weight vector and the second weight vector and the constraint on the transmission power.

**19.** Adaptive controller according to one of the claims 12 to 18, *characterized in that* it adaptively controls signal processing for demodulation at a receiver of the communication system, wherein the first signal processing scheme achieves spatial signal processing for beam forming, and the second signal processing scheme achieves temporal signal processing for demodulation of the input to the signal processing scheme subsequent to beam forming.

**20.** Adaptive controller according to one of the claims 12 to 18, *characterized in that* it adaptively controls signal processing for dual side equalization system, wherein the first signal processing scheme achieves equalization at a transmitter side, and the second signal processing scheme achieves equalization at a receiver side.

**21.** Adaptive controller according to one of the claims 12 to 18, *characterized in that* it adaptively controls signal processing in a multiple input multiple output communication system, wherein the first signal processing scheme achieves output of the transmission signal at a transmitter side, and the second signal processing scheme achieves beam forming at a receiver side.

**22.** Adaptive controller according to one of the claims 12 to 18, *characterized in that* it adaptively controls signal processing in a multiple input multiple output communication system with interfering users, wherein the first signal processing scheme achieves output of the transmission signal at a transmitter side, and the second signal processing scheme achieves beam forming at a receiver side.

**23.** Adaptive controller according to claim 22, *characterized in that* in comprises a interference characteristics estimation unit adapted to estimate interference characteristics through interference cancellation and subsequent calculation of the interference components by autocorrelation.

**24.** Computer program product directly loadable into the internal memory of an adaptive controller for adaptive control of weight vectors used in signal processing schemes operated in a communication system, comprising software code portions for performing the steps of one of the claims 1 to 11, when the product is run on a processor of the adaptive controller.

**Patentansprüche**

**1.** Verfahren zum Schätzen von Gewichtungsvektoren für eine adaptive Steuerung von Signalverarbeitungsschemata in einem Kommunikationssystem, wobei ein erstes Signalverarbeitungsschema mit einem ersten Gewichtungsvektor adaptiv gesteuert wird und ein zweites Signalverarbeitungsschema mit einem zweiten Gewichtungsvektor adaptiv gesteuert wird, **gekennzeichnet durch** die Schritte:

- Transformieren von Signalen, die aus mindestens einem Eingangssignal ($x_i$) zu dem ersten Signalverarbeitungsschema abgeleitet sind, in einen Eingangsvektor $U_k$ zu dem Schätzungsprozess;

- Schätzen eines Abgriffvektors $C_k$, der gemäß $C_k = W_s(k) \otimes W_t^*(k)$ dargestellt werden kann, wobei $W_s(k)$ der erste Gewichtungsvektor in einem Zeitmoment k mit Dimension N ist, $W_t(k)$ der zweite Gewichtungsvektor im Zeitmoment k mit Dimension L ist, $\otimes$ ein Kronecker-Produktoperator ist und * ein Konjugiert-Komplex-Operator ist, **durch** Anwenden eines Verfahrens minimaler mittlerer Quadrate, um eine Differenz zwischen einem Bezugssignal d(k) und einem inneren Produkt z(k) des Abgriffvektors mit dem Eingangsvektor zu dem Schätzungsprozess gemäß:

$$e_k = d_k - z_k = d_k - C_k^H \cdot U_k \rightarrow \min$$

zu minimieren.

- Faktorisieren des Abgriffvektors in den ersten Gewichtungsvektor und den zweiten Gewichtungsvektor **durch** Suchen von Elementen für den ersten Gewichtungsvektor und den zweiten Gewichtungsvektor derart, dass eine Produktform dieser Vektoren eine Matrix $R_k$ annähert, die aus Elementen des Abgriffvektors gemäß

$$R_k = \{r_{ij}(k)\} = \{c_{(i-1)N+j}\} = W_s(k)W_t^H(k)$$

eingerichtet ist.

2. Verfahren nach Anspruch 1, **gekennzeichnet dadurch, dass** die Transformation in den Eingangsvektor zu dem Schätzungsprozess durch Neuanordnen von Signalen, die dem ersten Signalverarbeitungsschema zugeführt werden, in ein Vektorformat erreicht wird.

3. Verfahren nach Anspruch 1, **gekennzeichnet dadurch, dass** die Transformation in den Eingangsvektor zu dem Schätzungsprozess durch Neuanordnen von Signalen, die von dem ersten Signalverarbeitungsschema emittiert werden, in ein Vektorformat erreicht wird.

4. Verfahren nach Anspruch 2 oder 3, **gekennzeichnet dadurch, dass** es ferner den Schritt zum Abbilden von interferierenden Signalen auf den Eingangsvektor zu dem Schätzungsprozess umfasst.

5. Verfahren nach einem der Ansprüche 1 bis 4, **gekennzeichnet dadurch, dass** ein Algorithmus minimaler mittlerer Quadrate angewendet wird, um den Abgriffvektor zu schätzen.

6. Verfahren nach Anspruch 5, **gekennzeichnet dadurch, dass** der mittlere Quadratfehler gemäß einer Einschränkung in der Übertragungsleistung in dem Kommunikationssystem minimiert wird.

7. Verfahren nach Anspruch 6, **gekennzeichnet dadurch, dass** ein Ziel zum Minimieren von Differenzen zwischen Elementen des Abgriffvektors und Produkten von Elementen des ersten Gewichtungsvektors und des zweiten Gewichtungsvektors eine Lagrange-Zielfunktion ist, die Quadratwerte von Differenzen und die Einschränkung in der Übertragungsleistung widerspiegelt.

8. Verfahren nach einem der Ansprüche 1 bis 7, **gekennzeichnet dadurch, dass** Signalverarbeitung Demodulation in einem Empfänger des Kommunikationssystems erreicht, das erste Signalverarbeitungsschema räumliche Signalverarbeitung für Strahlenbildung erreicht und das zweite Signalverarbeitungsschema zeitliche Signalverarbeitung für Demodulation anschließend zur Strahlenbildung erreicht.

9. Verfahren nach einem der Ansprüche 1 bis 7, **gekennzeichnet dadurch, dass** das Signalverarbeitungsschema ein Dualseitenausgleichssystem erreicht, das erste Signalverarbeitungsschema Ausgleich auf einer Senderseite erreicht und das zweite Signalverarbeitungsschema Ausgleich auf einer Empfängerseite erreicht.

10. Verfahren nach einem der Ansprüche 1 bis 7, **gekennzeichnet dadurch, dass** das Kommunikationssystem ein Vielfacheingang-Vielfachausgang-Kommunikationssystem ist, das erste Signalverarbeitungsschema Ausgabe des Übertragungssignals auf einer Senderseite erreicht und das zweite Signalverarbeitungsschema Strahlenbildung auf einer Empfängerseite erreicht.

**11.** Verfahren nach einem der Ansprüche 1 bis 7, **gekennzeichnet dadurch, dass** das Kommunikationssystem ein Vielfacheingang-Vielfachausgang-Kommunikationssystem mit interferierenden Benutzern ist, das erste Signalverarbeitungsschema Ausgabe des Übertragungssignals auf einer Senderseite erreicht und das zweite Signalverarbeitungsschema Strahlenbildung auf einer Empfängerseite erreicht.

**12.** Adaptive Steuervorrichtung für eine adaptive Steuerung von Gewichtungsvektoren, die in Signalverarbeitungsschemata verwendet werden, die in einem Kommunikationssystem betrieben werden, wobei ein erstes Signalverarbeitungsschema mit einem ersten Gewichtungsvektor adaptiv gesteuert wird und ein zweites Signalverarbeitungsschema mit einem zweiten Gewichtungsvektor adaptiv gesteuert wird, **gekennzeichnet durch**:

- eine transformierende Einheit, die angepasst ist, Signale, die aus mindestens einem Eingangssignal ($x_i$) zu dem ersten Signalverarbeitungsschema abgeleitet sind, in einen Eingangsvektor $U_k$ zu dem Schätzungsprozess zu transformieren;
- eine Schätzungseinheit, die angepasst ist, einen Abgriffvektor $C_k$ zu schätzen, der gemäß $C_k = W_s(k) \otimes W_t^*(k)$ dargestellt werden kann, wobei $W_s(k)$ der erste Gewichtungsvektor in einem Zeitmoment k mit Dimension N ist, $W_t(k)$ der zweite Gewichtungsvektor im Zeitmoment k mit Dimension L ist, $\otimes$ ein Kronecker-Produktoperator ist und * ein Konjugiert-Komplex-Operator ist, **durch** Anwenden eines Verfahrens minimaler mittlerer Quadrate, um eine Differenz zwischen einem Bezugssignal d(k) und einem inneren Produkt z(k) des Abgriffvektors mit dem Eingangsvektor zu dem Schätzungsprozess gemäß:

$$e_k = d_k - z_k = d_k - C_k^H \cdot U_k \rightarrow \min$$

zu minimieren.
- eine Faktorisierungseinheit, die angepasst ist, den Abgriffvektor in den ersten Gewichtungsvektor und den zweiten Gewichtungsvektor **durch** Suchen von Elementen für den ersten Gewichtungsvektor und den zweiten Gewichtungsvektor derart zu faktorisieren, dass eine Produktform dieser Vektoren eine Matrix $R_k$ annähert, die aus Elementen des Abgriffvektors gemäß

$$R_k = \{r_{ij}(k)\} = \{c_{(i-1)N+j}\} = W_s(k)W_t^H(k)$$

eingerichtet ist.

**13.** Adaptive Steuervorrichtung nach Anspruch 12, **gekennzeichnet dadurch, dass** die Transformationseinheit angepasst ist, Signale, die zu dem ersten Signalverarbeitungsschema zugeführt werden, in ein Vektorformat neu anzuordnen.

**14.** Adaptive Steuervorrichtung nach Anspruch 12, **gekennzeichnet dadurch, dass** die Transformationseinheit angepasst ist, Signale, die von dem ersten Signalverarbeitungsschema emittiert werden, in ein Vektorformat neu anzuordnen.

**15.** Adaptive Steuervorrichtung nach Anspruch 13 oder 14, **gekennzeichnet dadurch, dass** die Transformationseinheit ferner angepasst ist, interferierende Signale auf den Eingangsvektor zu dem Schätzungsprozess abzubilden.

**16.** Adaptive Steuervorrichtung nach einem der Ansprüche 12 bis 15, **gekennzeichnet dadurch, dass** die Schätzungseinheit eine Optimierungseinheit umfasst, die angepasst ist, einen Algorithmus minimaler mittlerer Quadrate zu betreiben, um den Abgriffvektor zu schätzen.

**17.** Adaptive Steuervorrichtung nach Anspruch 16, **gekennzeichnet dadurch, dass** die Optimierungseinheit angepasst ist, den mittleren Quadratfehler gemäß einer Einschränkung in der Übertragungsleistung in dem Kommunikationssystem zu minimieren.

**18.** Adaptive Steuervorrichtung nach Anspruch 17, **gekennzeichnet dadurch, dass** die Optimierungseinheit angepasst ist, eine Lagrange-Zielfunktion zu minimieren, die Quadratwerte von Differenzen zwischen Elementen des Abgriffvektors und Produkte von Elementen des ersten Gewichtungsvektors und des zweiten Gewichtungsvektors und die Einschränkung in der Übertragungsleistung widerspiegelt.

**19.** Adaptive Steuervorrichtung nach einem der Ansprüche 12 bis 18, **gekennzeichnet dadurch, dass** sie Signalverarbeitung für Demodulation in einem Empfänger des Kommunikationssystems adaptiv steuert, wobei das erste Signalverarbeitungsschema räumliche Signalverarbeitung für Strahlenbildung erreicht und das zweite Signalverarbeitungsschema zeitliche Signalverarbeitung für Demodulation der Eingabe zu dem Signalverarbeitungsschema anschließend zu einer Strahlenbildung erreicht.

**20.** Adaptive Steuervorrichtung nach einem der Ansprüche 12 bis 18, **gekennzeichnet dadurch, dass** sie Signalverarbeitung für ein Dualseitenausgleichssystem adaptiv steuert, wobei das erste Signalverarbeitungsschema Ausgleich auf einer Senderseite erreicht und das zweite Signalverarbeitungsschema Ausgleich auf einer Empfängerseite erreicht.

**21.** Adaptive Steuervorrichtung nach einem der Ansprüche 12 bis 18, **gekennzeichnet dadurch, dass** sie Signalverarbeitung in einem Vielfacheingang-Vielfachausgang-Kommunikationssystems adaptiv steuert, wobei das erste Signalverarbeitungsschema Ausgabe des Übertragungssignals auf einer Senderseite erreicht und das zweite Signalverarbeitungsschema Strahlenbildung auf einer Empfängerseite erreicht.

**22.** Adaptive Steuervorrichtung nach einem der Ansprüche 12 bis 18, **gekennzeichnet dadurch, dass** sie Signalverarbeitung in einem Vielfacheingang-Vielfachausgang-Kommunikationssystems mit interferierenden Benutzern adaptiv steuert, wobei das erste Signalverarbeitungsschema Ausgabe des Übertragungssignals auf einer Senderseite erreicht und das zweite Signalverarbeitungsschema Strahlenbildung auf einer Empfängerseite erreicht.

**23.** Adaptive Steuervorrichtung nach Anspruch 22, **gekennzeichnet dadurch, dass** sie eine Interferenzcharakteristik-Schätzungseinheit umfasst, die angepasst ist, Interferenzcharakteristika durch Interferenzaufhebung und anschließende Kalkulation der Interferenzkomponenten durch Autokorrelation zu schätzen.

**24.** Computerprogrammprodukt, das in den internen Speicher einer adaptive Steuervorrichtung direkt geladen werden kann für eine adaptive Steuerung von Gewichtungsvektoren, die in Signalverarbeitungsschemata verwendet werden, die in einem Kommunikationssystem betrieben werden, umfassend Softwarecodeabschnitte zum Durchführen der Schritte nach einem der Ansprüche 1 bis 11, wenn das Produkt in einem Prozessor der adaptiven Steuervorrichtung läuft.

**Revendications**

**1.** Procédé d'estimation de vecteurs de pondération pour une commande adaptative de systèmes de traitement de signal dans un système de communication, dans lequel un premier système de traitement de signal est adaptativement commandé avec un premier vecteur de pondération et un second système de traitement de signal est commandé adaptativement avec un second vecteur de pondération, **caractérisé par** les étapes de :

- transformation de signaux dérivés à partir d'au moins un signal d'entrée ($x_i$) pour le premier système de traitement de signal en un vecteur d'entrée $U_k$ pour le traitement d'estimation ;
- estimation d'un vecteur de paramètres $C_k$ représentable selon $C_k = W_s(k) \otimes W_t^*(k)$, où $W_s(k)$ est le premier vecteur de pondération à l'instant de temps k ayant une dimension N, $W_t(k)$ est le second vecteur de pondération à l'instant de temps k ayant une dimension L, $\otimes$ est un opérateur de produit de Kronecker, et * est l'opérateur de conjugué complexe, en appliquant un procédé quadratique moyen minimum pour minimiser une différence entre un signal de référence d(k) et un produit interne z(k) du vecteur de paramètres avec le vecteur d'entrée pour le traitement d'estimation selon :
$e_k = d_k - z_k = d_k - C_k^H U_k \rightarrow \min$
- factorisation du vecteur de paramètres dans le premier vecteur de pondération et le second vecteur de pondération en recherchant des éléments pour le premier vecteur de pondération et le second vecteur de pondération pour qu'une forme de produit de ces vecteurs approche une matrice $R_k$ qui est établie à partir des éléments du vecteur de paramètres selon

$$R_k = \{\tau_{ij}(k)\} = \{c_{(i-1)N+j}\} = W_s(k) W_t^H(k).$$

**2.** Procédé selon la revendication 1, **caractérisé en ce que** la transformation dans le vecteur d'entrée pour le traitement d'estimation est obtenue en ré-arrangeant des signaux fournis au premier système de traitement de signal dans un format de vecteur.

**3.** Procédé selon la revendication 1, **caractérisé en ce que** la transformation dans le vecteur d'entrée pour le traitement d'estimation est obtenue en ré-arrangeant des signaux émis par le premier système de traitement de signal dans un format de vecteur.

**4.** Procédé selon la revendication 2 ou 3, **caractérisé en ce qu'**il comprend en outre l'étape de cartographie des signaux d'interférence sur le vecteur d'entrée pour le traitement d'estimation.

**5.** Procédé selon l'une des revendications 1 à 4, **caractérisé en ce qu'**un algorithme quadratique moyen minimum est appliqué pour estimer le vecteur de paramètres.

**6.** Procédé selon la revendication 5, **caractérisé en ce que** l'erreur quadratique moyenne est minimisée sous une contrainte sur la puissance de transmission dans le système de communication.

**7.** Procédé selon la revendication 6, **caractérisé en ce qu'**un objectif pour minimiser des différences entre des éléments du vecteur de paramètres et des produits des éléments du premier vecteur de pondération et du second vecteur de pondération est une fonction objective de Lagrange reflétant des valeurs quadratiques des différences et la contrainte sur la puissance de transmission.

**8.** Procédé selon l'une quelconque des revendications 1 à 7, **caractérisé en ce que** le traitement de signal réalise une démodulation sur un récepteur du système de communication, le premier système de traitement de signal réalise un traitement de signal spatial pour une formation de faisceau, et le second système de traitement de signal réalise un traitement de signal temporel pour une démodulation postérieurement à la formation de faisceau.

**9.** Procédé selon l'une des revendications 1 à 7, **caractérisé en ce que** le système de traitement de signal réalise un système d'égalisation latéral double, le premier système de traitement de signal réalise l'égalisation du côté de l'émetteur, et le second système de traitement de signal réalise l'égalisation du côté du récepteur.

**10.** Procédé selon l'une des revendications 1 à 7, **caractérisé en ce que** le système de communication est un système de communication à multiples entrées et multiples sorties, le premier système de traitement de signal fournit une sortie du signal de transmission du côté de l'émetteur et le second système de traitement de signal fournit une formation de faisceau du côté du récepteur.

**11.** Procédé selon l'une des revendications 1 à 7, **caractérisé en ce que** le système de communication est un système de communication à multiples entrées et multiples sorties avec l'interférence des utilisateurs, le premier système de traitement de signal fournit une sortie du signal de transmission du côté de l'émetteur et le second système de traitement de signal fournit une formation de faisceau du côté du récepteur.

**12.** Dispositif de commande adaptatif pour une commande adaptative des vecteurs de pondération utilisés dans des systèmes de traitement de signal mis en oeuvre dans un système de communication, dans lequel un premier système de traitement de signal est adaptativement commandé avec un premier vecteur de pondération et un second système de traitement de signal est adaptativement commandé avec un second vecteur de pondération, **caractérisé par** :

- une unité de transformation adaptée pour transformer des signaux dérivés à partir d'au moins un signal d'entrée $(x_i)$ pour le premier système de traitement de signal dans un vecteur d'entrée $U_k$ pour le traitement d'estimation ;
- une unité d'estimation adaptée pour estimer un vecteur de paramètres $C_k$ représentable selon $C_k = W_s(k) \otimes W_t^*(k)$, dans lequel $W_s(k)$ est le premier vecteur de pondération à l'instant de temps k ayant une dimension N, $W_t(k)$ est le second vecteur de pondération à l'instant de temps k ayant une dimension L, $\otimes$ est un opérateur de produit de Kronecker, et * est l'opérateur de conjugué complexe, en appliquant un procédé quadratique moyen minimum pour minimiser une différence entre un signal de référence d(k) et un produit interne z(k) du vecteur de prise avec le vecteur d'entrée pour le traitement d'estimation selon :
$$e_k = d_k - z_k = d_k - C_k^H U_k \rightarrow \min$$
- une unité de factorisation adaptée pour factoriser le vecteur de paramètres dans le premier vecteur de pondération et le second vecteur de pondération en cherchant des éléments pour le premier vecteur de pondération et le second vecteur de pondération pour qu'une forme de produit de ces vecteurs approche une matrice $R_k$ qui est établie à partir des éléments du vecteur de paramètres selon

$$R_k = \{\tau_{ij}(k)\} = \{c_{(i-1)N+j}\} = W_s(k)W_t^H(k).$$

**13.** Dispositif de commande adaptatif selon la revendication 12, **caractérisé en ce que** l'unité de transformation est adaptée pour ré-arranger des signaux fournis au premier système de traitement de signal dans un format de vecteur.

**14.** Dispositif de commande adaptatif selon la revendication 12, **caractérisé en ce que** l'unité de transformation est adaptée pour ré-arranger des signaux émis au premier système de traitement de signal dans un format de vecteur.

**15.** Dispositif de commande adaptatif selon la revendication 13 ou 14, **caractérisé en ce que** l'unité de transformation est en outre adaptée pour cartographier des signaux d'interférence sur le vecteur d'entrée pour le traitement d'estimation.

**16.** Dispositif de commande adaptatif selon l'une des revendications 12 à 15, **caractérisé en ce que** l'unité d'estimation comprend une unité d'optimisation adaptée pour exploiter un algorithme quadratique moyen minimum pour estimer le vecteur de paramètres.

**17.** Dispositif de commande adaptatif selon la revendication 16, **caractérisé en ce que** l'unité d'optimisation est adaptée pour minimiser l'erreur quadratique moyenne sous une contrainte sur la puissance de transmission dans le système de communication.

**18.** Dispositif de commande adaptatif selon la revendication 17, **caractérisé en ce que** l'unité d'optimisation est adaptée pour minimiser une fonction objective de Lagrange reflétant des valeurs quadratiques des différences entre des éléments du vecteur de paramètres et les produits des éléments du premier vecteur de pondération et le second vecteur de pondération et la contrainte sur la puissance de transmission.

**19.** Dispositif de commande adaptatif selon l'une des revendications 12 à 18, **caractérisé en ce qu'**il commande adaptativement un traitement de signal pour une démodulation sur un récepteur du système de communication, dans lequel le premier système de traitement de signal réalise un traitement de signal spatial pour la formation de faisceau, et le second système de traitement de signal réalise un traitement de signal temporel pour une démodulation de l'entrée pour le système de traitement de signal postérieurement à la formation de faisceau.

**20.** Dispositif de commande adaptatif selon l'une des revendications 12 à 18, **caractérisé en ce qu'**il commande adaptativement un traitement de signal pour un système d'égalisation de côté double, dans lequel le premier système de traitement de signal réalise l'égalisation du côté de l'émetteur, et le second système de traitement de signal réalise l'égalisation du côté du récepteur.

**21.** Dispositif de commande adaptatif selon l'une des revendications 12 à 18, **caractérisé en ce qu'**il commande adaptativement un traitement de signal dans un système de communication à multiples entrées et multiples sorties, dans lequel le premier système de traitement de signal fournit une sortie du signal de transmission du côté de l'émetteur et le second système de traitement de signal fournit une formation de faisceau du côté du récepteur.

**22.** Dispositif de commande adaptatif selon l'une des revendications 12 à 18, **caractérisé en ce qu'**il commande adaptativement un traitement de signal dans un système de communication à multiples entrées et multiples sorties avec une interférence d'utilisateurs, dans lequel le premier système de traitement de signal fournit une sortie du signal de transmission du côté de l'émetteur et le second système de traitement de signal fournit une formation de faisceau du côté du récepteur.

**23.** Dispositif de commande adaptatif selon la revendication 22, **caractérisé en ce qu'**il comprend une unité d'estimation de caractéristique d'interférence adaptée pour estimer des caractéristiques d'interférence à travers une annulation d'interférence et le calcul par la suite des composants d'interférence par auto-corrélation.

**24.** Produit de programme informatique chargeable directement dans la mémoire interne d'un dispositif de commande adaptatif pour une commande adaptative des vecteurs de pondération utilisés dans des systèmes de traitement de signal mis en oeuvre dans un système de communication, comprenant des parties de code de logiciel pour réaliser les étapes d'une des revendications 1 à 11, lorsque le produit est exécuté sur un processeur du dispositif de commande adaptatif.

## FIG.1

## FIG.2

## FIG.3

# FIG.4

```
┌─────────────────────────────────┐
│   TRANSFORM SIGNALS DERIVED FROM │
│   INPUT SIGNALS INTO AN INPUT    │──── S10
│   VECTOR FOR THE ESTIMATION      │
│   PROCESS                        │
└─────────────────────────────────┘
                 │
                 ▼
┌─────────────────────────────────┐
│   ESTIMATE TAP VECTOR BY APPLYING│
│   A MINIMUM MEAN SQUARE METHOD   │──── S12
└─────────────────────────────────┘
                 │
                 ▼
┌─────────────────────────────────┐
│   FACTORIZE TAP VECTOR INTO FIRST│
│   WEIGHT VECTOR AND SECOND WEIGHT│──── S14
│   VECTOR                         │
└─────────────────────────────────┘
```

# FIG.5

```
┌─────────────────────────────────────┐──── 22
│  ┌────────────────────────────────┐  │
│  │       OPTIMIZATION UNIT        │──┼── 24
│  └────────────────────────────────┘  │
│                                       │
│  ┌────────────────────────────────┐  │
│  │    MATRIX CALCULATION UNIT     │──┼── 26
│  └────────────────────────────────┘  │
│                                       │
│  ┌────────────────────────────────┐  │
│  │ INTERFERENCE CHARACTERISTICS   │──┼── 28
│  │ ESTIMATION UNIT (OPTION)       │  │
│  └────────────────────────────────┘  │
└─────────────────────────────────────┘
```

# *FIG.6*

```
┌─────────────────────────────────┐
│  ESTIMATE OPTIMUM SOLUTION IN    │
│  VIEW OF AN ERROR NORM DERIVED   │──── S16
│  FROM MATRIX Ek                  │
└─────────────────────────────────┘
                 │
                 ▼
┌─────────────────────────────────┐
│  DERIVE SECOND WEIGHT VECTOR     │
│  FROM FIRST WEIGHT VECTOR BY     │──── S18
│  MATRIX OPERATION                │
└─────────────────────────────────┘
```

# *FIG.7*

## FIG.8

## FIG.9

RADIO CHANNELS

$W_t$, $W_r$ CALC.

# FIG.10

RADIO CHANNELS

$W_t$, $W_r$ CALC. —16

# FIG.11

46

REP.GEN.

TRANSFORM UNIT — 18

ADAPTIVE ALGORITHM — 20

SVD — 22

$W_r$ AND $W_t$ ESTIMATION — 22

$W_r$ OUTPUT

$W_t$ OUTPUT

## FIG.12

## FIG.13

## FIG.14

RADIO CHANNELS

$W_t$, $W_r$ CALC.

## FIG.15

$W_r$ OUTPUT

CORRELATION MATIX

SVD

$W_r$ AND $W_t$ ESTIMATION

$W_t$ OUTPUT